# EUROPÄISCHE PATENTSCHRIFT

(11) **EP 1 315 029 B1**
(45) Veröffentlichungstag und Bekanntmachung des Hinweises auf die Patenterteilung: **06.05.2004**
(21) Anmeldenummer: 02023931.5
(22) Anmeldetag: 25.10.2002
(51) Int. Cl.: G03B 42/02

(54) **Objekttisch für ein Mammographiegerät**
Object table for a mammography apparatus
Table d'objet pour un appareil de mammographie

(30) Priorität: 22.11.2001 SE 0103888
(43) Veröffentlichungstag der Anmeldung: 28.05.2003
(73) Patentinhaber: Siemens Aktiengesellschaft, 80333 München (DE)
(72) Erfinder: Damgaard, Jörgen Bjerg, 8310 Tranbjerg (DK)

(56) Entgegenhaltungen:
- WO-A-01/38938
- US-A- 3 826 922
- US-A- 5 148 466
- PATENT ABSTRACTS OF JAPAN vol. 007, no. 146 (P-206), 25. Juni 1983 (1983-06-25) & JP 58 057127 A (SHIMAZU SEISAKUSHO KK), 5. April 1983 (1983-04-05)

## Beschreibung

Die Erfindung betrifft einen Objekttisch für ein Mammographiegerät mit einem durchgehenden Tunnel für eine Röntgenfilmkassette sowie eine im Tunnel angeordnete Arretiervorrichtung für die Kassette, die einen ersten und einen zweiten Anschlag umfasst, wobei mindestens einer der Anschläge derart federbelastet ist, dass die Anschläge bei einer im Tunnel angebrachten Kassette dicht gegen die Schmalseiten der Kassette anliegen.

Ein Objekttisch mit einer Arretiervorrichtung dieser Art ist in einem Prospekt der Fa. Siemens mit dem Titel "Because she deserves the very best MAMMOMAT 3000 Nova" abgebildet. Die Arretiervorrichtung ist hier eine bogenförmig gebogene Blattfeder, die in einer der Tunnelwände befestigt ist und deren Enden mit den in der Einleitung erwähnten Anschlägen versehen ist. Beim Lösen einer im Tunnel angebrachten Kassette bzw. beim Auswechseln einer Kassette schiebt der Operateur mit der einen Hand einen der Anschläge in Richtung der Tunnelwand, so dass der Anschlag von der Schmalseite der Kassette entfernt wird. Gleichzeitig schiebt der Operateur die Kassette aus dem Tunnel heraus, indem er mit der anderen Hand die andere Schmalseite der Kassette in den Tunnel hineindrückt. Ein Lösen bzw. Auswechseln einer Kassette kann nur mit Hilfe beider Hände erfolgen.

Der Erfindung liegt die Aufgabe zugrunde, einen Objekttisch der eingangs genannten Art mit einer Arretiervorrichtung zu schaffen, bei der ein Lösen oder ein Auswechseln einer Kassette auf einfache Weise mit Hilfe einer Hand durchgeführt werden kann.

Diese Aufgabe wird erfindungsgemäß dadurch gelöst, dass die Arretiervorrichtung mindestens einen in seiner Längsrichtung federbelasteten Arm umfasst, dessen eines Ende mit dem ersten Anschlag versehen ist, dass der Arm in seiner Längsrichtung verschiebbar ist und dass der zweite Anschlag senkrecht zur Längsrichtung des Armes verschiebbar angeordnet ist. Beim Lösen einer Kassette, die in einer Arretiervorrichtung der genannten Art eingespannt ist, verschiebt der Operateur mit dem einen Finger der einen Hand den zweiten Anschlag senkrecht zur Längsrichtung des Armes, so dass der Anschlag von der Schmalseite der Kassette entfernt wird, wobei der erste Anschlag des durch eine in den Tunnel eingeschobene Kassette stark federbelasteten Armes nun automatisch die Kassette so weit herausdrückt, dass der Operateur sie greifen kann.

In einer vorteilhaften Weiterbildung der Arretiervorrichtung nach der Erfindung wird vorgeschlagen, dass die Arretiervorrichtung einen zweiten, in seiner Längsrichtung federbelasteten Arm umfasst, an dem der zweite Anschlag angebracht ist. Durch diesen Aufbau der Arretiervorrichtung werden bei einer zwischen den Anschlägen eingeführten Kassette die Anschläge der stark federbelasteten Arme gegen beide Schmalseiten der Kassette gedrückt. Nun kann der Operateur beim Herausnehmen der Kassette wählen, aus welcher der Tunnelöffnungen die Kassette entnommen werden soll. Dies erfolgt, indem der Anschlag mit einer Hand von derjenigen Schmalseite der Kassette, die der Operateur wünscht zuerst herauszudrücken, entfernt wird, wobei der federbelastete Anschlag, der an die andere Schmalseite der Kassette drückt, die Kassette automatisch herausschiebt.

In einer weiteren vorteilhaften Ausbildung der Erfindung ist ein verhältnismässig sophistikierter Aufbau der Arretiervorrichtung gegeben, in dem die Arme achsfluchtend zueinander liegen, deren freien Enden mit jeweils einem drehbaren Zahnrad über jeweils eine Welle drehbar verbunden sind, wobei die Wellen an den Zahnrädern exzentrisch angeordnet sind, wobei die Zahnräder in derselben Ebene angeordnet sind und ineinander eingreifen und wobei die Arme mittels Federn in ihren Längsrichtungen spannbar sind. Auch hier kann der Operateur auf beschriebene Weise wählen, aus welcher Tunnelöffnung eine in den Objekttisch eingeschobene Kassette mit einer Hand automatisch herausgeschoben werden soll.

Die Arretiervorrichtung nach der Erfindung ist vorzugsweise am Boden des Tunnels angebracht und in diesem herabgesenkt, so dass lediglich die Anschläge über den Boden hochragen. Somit ist es einfach, eine Kassette in den Tunnel eines Objekttisches hineinzuschieben.

Die Erfindung ist nachfolgend anhand mehrerer in den Zeichnungen dargestellter Ausführungsbeispiele näher erläutert. es zeigen:
- FIG. 1: eine Seitenansicht eines Objekttisches mit einem Teil einer Arretiervorrichtung nach der Erfindung,
- FIG. 2: eine Draufsicht einer Arretiervorrichtung nach der Erfindung in einer Parklage,
- FIG. 3: eine Draufsicht einer Arretiervorrichtung nach FIG. 2 in einer aktiven Lage,
- FIG. 4: eine Draufsicht einer weiteren Ausführungsform einer Arretiervorrichtung nach der Erfindung und
- FIG. 5: eine Draufsicht noch einer weiteren Ausführungsform einer Arretiervorrichtung nach der Erfindung.

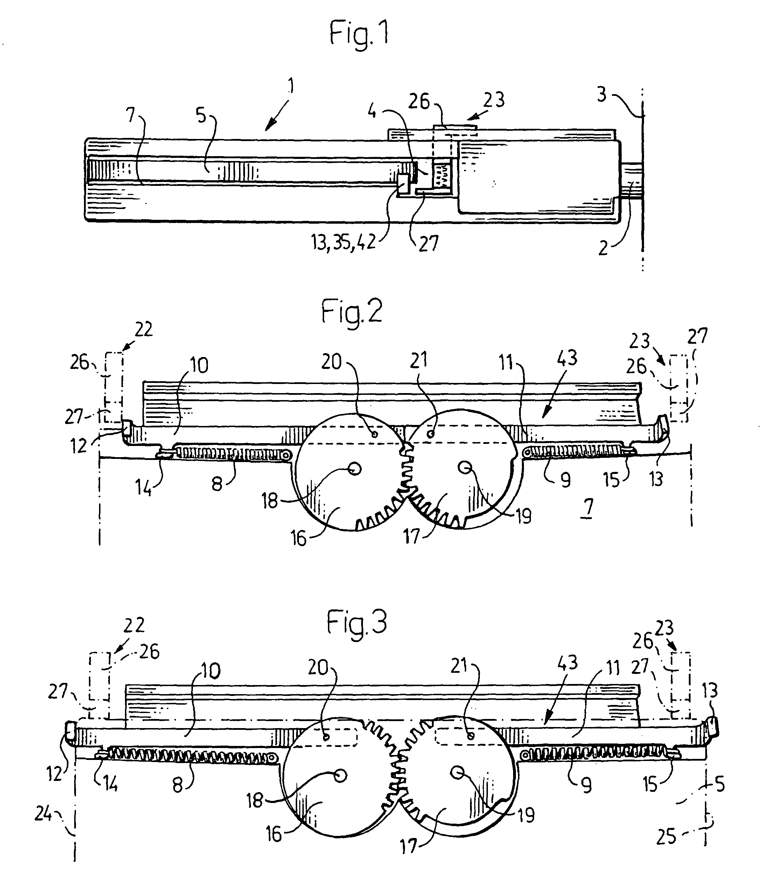

In der FIG. 1 ist eine Seitenansicht eines Objekttisches 1 gezeigt, der über eine Welle 2 an einem Arm 3 für eine hier nicht dargestellte Röntgenröhre befestigt ist. Der Objekttisch 1 ist mit einem durchgehenden Tunnel 4 versehen, in den eine Röntgenfilmkassette 5 einführbar ist. In dieser Figur ist auch eine von zwei später näher beschriebenen Sperrvorrichtungen 23 für eine unten näher beschriebene Arretiervorrichtung für die Kassette 5 gezeigt, wobei die Arretiervorrichtung am Boden 7 des Tunnels 4 angeordnet ist.

In der FIG. 2 ist eine in einer Draufsicht gezeigte Arretiervorrichtung 43 für eine Kassette 5 dargestellt. Die Arretiervorrichtung 43 ist wie oben beschrieben am Boden 7 des Tunnels 4 angebracht. Die Arretiervorrichtung 43, die hier in einer sog. Parklage gezeigt ist, umfasst zwei in Längsrichtung mittels Federn 8, 9 belastete, achsfluchtend miteinander angeordnete Arme 10, 11 deren äußeren Enden mit jeweils einem Anschlag 12, 13 versehen sind. Das eine Ende der Feder 8 ist mit dem Arm 10 über einen von diesem herausragenden Haken 14 und das andere Ende der Feder 8 ist mit dem Boden 7 verbunden. Das eine Ende der Feder 9 ist mit dem Arm 11 über einen von diesem herausragenden Haken 15 und das andere Ende der Feder 4 ist mit dem Boden 7 verbunden. Die inneren Enden der Arme 10, 11 sind mit jeweils einem um Wellen 18, 19 drehbaren Zahnrad 16, 17 über jeweils einer Welle 20, 21 drehbar verbunden. Die Wellen 20, 21 der Arme 10, 11 sind an den Zahnrädern 16, 17 exzentrisch angeordnet. Die Zahnräder 16, 17 sind in derselben Ebene angeordnet und greifen ineinander ein. Die Arretiervorrichtung 43 ist im Boden 7 des Tunnels 4 abgesenkt, so dass lediglich die Anschläge 12, 13 über den Boden 7 hochragen.

Ein Hineinschieben einer Kassette 5 in den Objekttisch 1 kann von beiden Öffnungen des Tunnels 4 erfolgen. Beim Einführen der Kassette 5 von der in der Zeichnungsebene rechten Seite, wird der Anschlag 13 zur Seite geschoben, so dass die Kassette 5 in den Tunnel hineingeschoben werden kann. Damit wird der Arm 11 um die Welle 21 gedreht. Später beschriebene Sperrvorrichtungen 22, 23, die bei einer im Tunnel 4 angebrachten Kassette 5 eine derartige Bewegung der Arme 10, 11 verhindern, erlaubt eine solche Bewegung, wenn die Arretiervorrichtung 43 sich in einer Parklage befindet. Die Kassette 5 wird zunächst in den Tunnel 4 hineingeschoben, bis deren eine Schmalseite 24 den Anschlag 12 des Armes 10 erreicht. Wenn die Kassette 5 manuell in den Tunnel 4 weiter hineingeführt wird, wird der Arm 10 in seiner Längsrichtung verschoben, gleichzeitig damit, dass der Arm 10, in dem er über die Welle 20 mit dem Zahnrad 16 verbunden ist, das Zahnrad 16 gegen den Uhrzeigersinn dreht, wobei die Feder 8 gespannt wird. Das Zahnrad 17 wird nun gleichzeitig genau so viel gedreht aber im Uhrzeigersinn, wobei der Arm 11 und damit der Anschlag 13, da der Arm 11 mit dem Zahnrad 17 über die Welle 21 verbunden ist, in seiner Längsrichtung genau so weit verschoben wird wie der Arm 10, wobei auch die Feder 9 des Armes 11 gespannt wird. Wenn der Abstand zwischen den Anschlägen 12 und 13 ausreichend groß ist, wird nun die Kassette 5 so plaziert, dass der Anschlag 12 gegen die eine Schmalseite 24 der Kassette 5 und der Anschlag 13 gegen die andere Schmalseite 25 der Kassette 5 federnd anliegen. Dies ist in der FIG. 3 dargestellt.

Beim Einführen der Kassette 5 von der in der Zeichnungsebene linken Seite wird der Anschlag 12 so verschoben, dass die Kassette 5 in den Tunnel 4 hineingeschoben werden kann. Der bereits beschriebene Verlauf erfolgt nun spiegelverkehrt.

Bei einer im Objekttisch 1 eingeführten Kassette 5 sperrt die Sperrvorrichtung 22, 23, wie es in der FIG. 3 gezeigt ist, die Anschläge 12, 13 der Arme 10, 11, so dass sie nicht um ihre Wellen 20, 21 gedreht werden können. Die Sperrvorrichtung 22, 23, die in der FIG. 1 gezeigt ist, besteht aus einem federbelasteten Druckknopf 26, dessen freies Ende mit einer Zunge 27 versehen ist, die bei einer im Objekttisch 1 eingeführten Kassette 5 gegen die Arme 10, 11 anliegt.

Beim Lösen bzw. Auswechseln der Kassette 5, so dass die Kassette 5 aus der in der Zeichnungsebene rechten Seite herausgeschoben wird, wird der Knopf 26 der Sperrvorrichtung 23 mit einem Finger heruntergedrückt, so dass die Zunge 27 unter dem Arm 11 zu liegen kommt. Gleichzeitig wird mit einem weiteren Finger der Anschlag 13 verschoben, d.h. der Arm 11 wird um die Welle 21 gedreht, so dass der Anschlag 13 von der Schmalseite 25 der Kassette 5 entfernt wird. In dieser Lage des Anschlages 13 verschiebt der Anschlag 12 mit dem federbelasteten Arm 10 die Kassette 5 aus dem Tunnel 4 so weit heraus, dass der Operateur die Kassette 5 greifen kann.

Wenn der Operateur die Kassette 5 aus der linken Seite in der Zeichnungsebene herauszuschieben wünscht, wird der Knopf 26 für die Sperrvorrichtung 22 heruntergedrückt. Danach wird der Anschlag 12 auf beschriebene Weise von der Schmalseite 24 der Kassette 5 entfernt, wobei der Anschlag 13 des federbelasteten Armes 11 die Kassette 5 so weit herausschiebt, dass der Operateur sie greifen kann.

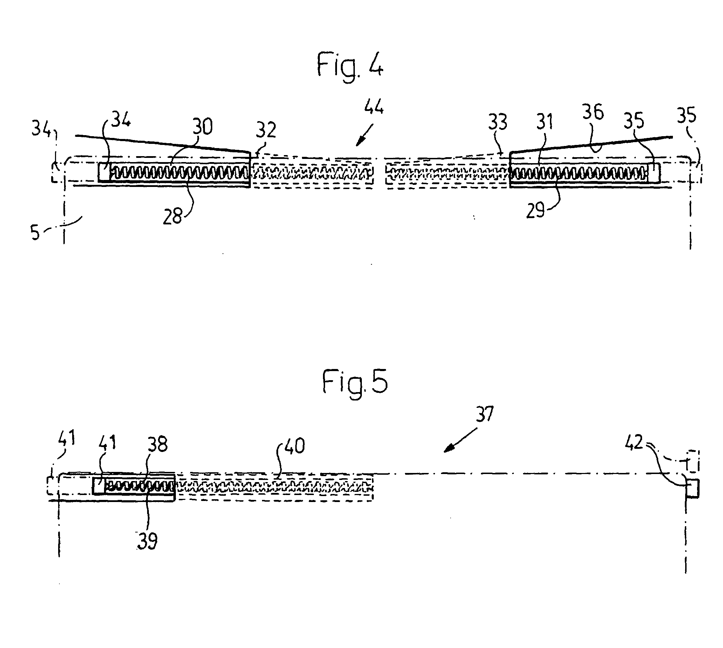

In der FIG. 4 ist eine vereinfachte Ausführungsform einer Arretiervorrichtung 44 nach der Erfindung gezeigt. Die Arretiervorrichtung 44 umfasst hier zwei mittels Federn 28, 29 belastete, miteinander achsfluchtend angeordnete Arme 30, 31, die im Boden 7 des Tunnels 4 abgesenkt und zum Teil in jeweils einen Hohlraum 32, 33 hingeschoben sind. Die Hohlräume 32, 33 sind dafür vorgesehen, die Bewegungen der Arme 30, 31 zu stabilisieren. In der Figur ist gezeigt, dass jede Versenkung keilförmig ausgebildet ist, so dass die äußeren Enden der Arme 30, 31 zum Teil seitlich verschiebbar sind. Die äußeren Enden der Arme 30, 31 sind mit Anschlägen 34, 35 versehen, die über den Tunnelboden 7 hochragen. Beim Laden einer Kassette 5 wird z.B. der Anschlag 35 und damit auch der Arm 31 gegen die eine Kante 36 der Versenkung verschoben, wobei die Kassette 5 nun in den Tunnel 4 des Objekttisches 1 hineingeführt werden kann. Der Objekttisch 1 ist in der FIG. 1 gezeigt. Die Kassette 5 wird so weit hingeschoben, dass deren eine Schmalseite den Anschlag 34 des Armes 30 erreicht und weiterhin so weit, dass die andere Schmalseite der Kassette 5 so zu liegen kommt, dass sie gegen den Anschlag 35 des Armes 31 anliegt. Die Kraft der Feder 28 des Armes 30 wird nun zum Teil an den Arm 31 übertragen, wobei bei einer eingeschobenen Kassette 5 die Anschläge 34, 35 mit gleich verteilter Federkraft gegen die Schmalseiten der Kassette 5 anliegen. In der Figur wird mit strichpunktierten Konturen der Anschläge 34, 35 deren Lagen bei einer eingespannten Kassette 5 angedeutet. Der Operateur kann nun wählen, aus welcher Tunnelöffung die Kassette 5 herausgeschoben werden soll, in dem einer der Anschläge 34, 35, wie in Verbindung mit den FIG. 1 und 2 beschrieben worden ist, von der Kassette 5 entfernt wird.

In der FIG. 5 ist eine extrem einfache Ausführungsform einer Arretiervorrichtung 37 nach der Erfindung gezeigt. Diese Arretiervorrichtung 37 umfasst lediglich einen mittels einer Feder 38 gespannten Arm 39 mit einem Anschlag 41, wobei der Arm 39 und die Feder 38 im Tunnelboden 7 abgesenkt sind. Ein Teil des Armes 39 ist in einem Hohlraum 40 angeordnet, um den Arm 39 zu stabilisieren. Die Arretiervorrichtung 37 umfasst auch einen zweiten Anschlag 42, der senkrecht zur Längsrichtung des Armes 39 verschiebbar ist. Beim Laden einer Kassette 5 wird der Anschlag 42 in eine Position gebracht, die mit punktgestrichelten Konturen des Anschlages 42 gezeigt ist. Nun kann die Kassette 5 in den Tunnel 4 für den Objekttisch 1 (FIG.1) hineingeschoben werden und wie in Verbindung mit bereits beschriebenen Ausführungsbeispielen den Arm 39 herausdrücken, bis die Kassette 5 eine solche Position erreicht hat, dass sie zwischen dem Anschlag 41 und dem nunmehr zurückgefederten Anschlag 42 angebracht ist. Bei einer Arretiervorrichtung dieser Art kann die Kassette 5 lediglich aus einer Tunnelöffnung herausgeschoben werden. Wenn der Anschlag 42 von der Kassette 5 entfernt wird, wird der Anschlag 41 die Kassette 5 mit Federkraft aus derjenigen Tunnelöffnung, an der sich der Anschlag 42 befindet, herausschieben.

## Patentansprüche

1. Objekttisch für ein Mammopgrahiegerät mit einem durchgehenden Tunnel (4) für eine Röntgenfilmkassette (5) sowie einer im Tunnel (4) angeordneten Arretiervorrichtung (37, 43, 44) für die Kassette (5), die einen ersten und einen zweiten Anschlag (12, 13, 34, 35, 41, 42) umfasst, wobei mindestens einer der Anschläge (12, 13, 34, 35, 41, 42) derart federbelastet ist, dass die Anschläge (12, 13, 34, 35, 41, 42) bei einer im Tunnel (4) angebrachten Kassette (5) dicht gegen die Schmalseiten (24, 25) der Kassette (5) anliegen, **dadurch gekennzeichnet, dass** die Arretiervorrichtung (37, 43, 44) mindestens einen in seiner Längsrichtung federbelasteten Arm (10, 11, 30, 31, 39) umfasst, dessen eines Ende mit dem ersten Anschlag (12, 13, 34, 35, 41, 42) versehen ist, dass der Arm (10, 11, 30, 31, 39) in seiner Längsrichtung verschiebbar ist und dass der zweite Anschlag (12, 13, 34, 35, 41, 42) senkrecht zur Längsrichtung des Armes (10, 11, 30, 31, 39) verschiebbar angeordnet ist.

2. Objekttisch nach Anspruch 1, **dadurch gekennzeichnet, dass** die Arretiervorrichtung (37, 43, 44) einen zweiten in seiner Längsrichtung federbelasteten Arm (10, 11, 30, 31, 39) umfasst, an dem der zweite Anschlag (12, 13, 34, 35, 41, 42) angebracht ist.

3. Objekttisch nach Anspruch 1 oder 2, **dadurch gekennzeichnet, dass** die Arme (10, 11, 30, 31, 39) achsfluchtend zueinander liegen, deren freien Enden mit jeweils einem drehbaren Zahnrad (16, 17) über jeweils eine Welle (20, 21) drehbar verbunden sind, wobei die Wellen (20, 21) an den Zahnrädern (16, 17) exzentrisch angeordnet sind, wobei die Zahnräder (16, 17) in derselben Ebene angeordnet sind und ineinander eingreifen und wobei die Arme (10, 11) mittels Federn (8, 9, 28, 29, 38) in Ihren Längsrichtungen spannbar sind.

4. Objekttisch nach einem der Anrpüche 1 bis 3, **dadurch gekennzeichnet, dass** die Arretiervorrichtung (37, 43, 44) am Boden (7) des Tunnels (4) angebracht und in diesem abgesenkt ist, so dass lediglich die Anschläge (12, 13, 34, 35, 41, 42) über den Boden (7) hochragen.

## Claims

1. Object table for a mammography device having a straight-through tunnel (4) for an x-ray film cartridge (5) as well as a stopping device (37, 43, 44) for the cartridge (5) disposed in the tunnel (4), said stopping device comprising a first and a second stop (12, 13, 34, 35, 41, 42), with at least one of the stops (12, 13, 34, 35, 41, 42) being spring-loaded such that the stops (12, 13, 34, 35, 41, 42) in the case of a cartridge (5) mounted in the tunnel (4) sit close against the narrow sides (24, 25) of the cartridge (5), **characterised in that** the stopping device (37, 43, 44) comprises at least one arm (10, 11, 30, 31, 39) that is spring-loaded in its longitudinal direction, one end of which is provided with the first stop (12, 13, 34, 35, 41, 42), that the arm (10, 11, 30, 31, 39) is movable in its longitudinal direction, and that the second stop (12, 13, 34, 35, 41, 42) is movably disposed vertically with respect to the longitudinal direction of the arm (10, 11, 30, 31, 39).

2. Object table according to Claim 1, **characterised in that** the stopping device (37, 43, 44) comprises a second arm (10, 11, 30, 31, 39) that is spring-loaded in its longitudinal direction and on which the second stop (12, 13, 34, 35, 41, 42) is mounted.

3. Object table according to Claim 1 or 2, **characterised in that** the arms (10, 11, 30, 31, 39) are in axial alignment with each other and their free ends are rotatably connected in each case to a revolving toothed wheel (16, 17) via a shaft (20, 21) in each case, whereby the shafts (20, 21) are eccentrically disposed at the toothed wheels (16, 17), whereby the toothed wheels (16, 17) are disposed in the same plane and engage in one another, and whereby the arms (10, 11) can be tensioned in their longitudinal directions by means of springs (8, 9, 28, 29, 38).

4. Object table according to one of Claims 1 to 3, **characterised in that** the stopping device (37, 43, 44) is mounted on the floor (7) of the tunnel (4) and is sunk down into this in such a way that only the stops (12, 13, 34, 35, 41, 42) project above the floor (7).

## Revendications

1. Table d'objets pour un appareil de mammographie, comprenant un tunnel (4) continu pour une cassette (5) de film radiographique, ainsi qu'un dispositif (37, 43, 44) disposé dans le tunnel (4) d'arrêt de la cassette (5), qui comprend une première et une deuxième butées (12, 13, 34, 35, 41, 42), au moins l'une des butées (12, 13, 34, 35, 41, 42) étant soumise à l'action d'un ressort de façon à ce que les butées (12, 13, 34, 35, 41, 42) s'appliquent, pour une cassette (5) mise dans le tunnel (4), étroitement sur les petits côtés (24, 25) de la cassette (5), **caractérisée en ce que** le dispositif (37, 43, 44) d'arrêt comprend au moins un bras (10, 11, 30, 31, 39) qui est soumis à l'action d'un ressort dans sa direction longitudinale et dont une extrémité est munie de la première butée (12, 13, 34, 35, 41, 42), **en ce que** le bras (10, 11, 30, 31, 39) peut coulisser dans sa direction longitudinale et **en ce que** la deuxième butée (12, 13, 34, 35, 41, 42) est montée coulissante, perpendiculairement à la direction longitudinale du bras (10, 11, 30, 31, 39).

2. Table d'objets suivant la revendication 1, **caractérisée en ce que** le dispositif (37, 43, 44) d'arrêt comprend un deuxième bras (10, 11, 30, 31, 39) qui peut être chargé par un ressort dans sa direction longitudinale et sur lequel est montée la deuxième butée (12, 13, 34, 35, 41, 42).

3. Table d'objets suivant la revendication 1 ou 2, **caractérisée en ce que** les bras (10, 11, 30, 31, 39) ont des axes alignés dont les extrémités libres sont reliées, avec possibilité de tourner, à respectivement une roue (16, 17) dentée tournante par respectivement un arbre (20, 21), les arbres (20, 21) étant placés de manière excentrée sur les roues (16, 17) dentées, les roues (16, 17) dentées étant disposées dans le même plan et engrenant l'une dans l'autre et les bras (10, 11) pouvant être bloqués dans leur direction longitudinale au moyen de ressorts (8, 9, 28, 29,38).

4. Table d'objets suivant l'une des revendications 1 à 3, **caractérisée en ce que** le dispositif (37, 43, 44) d'arrêt est placé au fond (7) du tunnel (4) et est abaissé dans celui-ci de sorte que seules les butées (12, 13, 34, 35, 41, 42) dépassent au dessus du fond (7).
